# FASCICULE DE BREVET EUROPEEN

(11) **EP 3 013 721 B1**
(45) Date de publication et mention de la délivrance du brevet: **06.09.2017**
(21) Numéro de dépôt: 14735631.5
(22) Date de dépôt: 18.06.2014
(51) Int. Cl.: B65G 63/00, B61L 3/00

(54) **PROCÉDÉ DE GUIDAGE D'UN VÉHICULE AÉROPORTUAIRE**
VERFAHREN ZUR STEUERUNG EINES FLUGHAFENFAHRZEUGS
METHOD FOR STEERING AN AIRPORT VEHICLE

(30) Priorité: 24.06.2013 FR 1355982
(43) Date de publication de la demande: 04.05.2016
(73) Titulaire: Batterie Mobile, 70400 Hericourt (FR)
(72) Inventeur: HECKY, Stéphane, F-90000 Belfort (FR); KLEIN, Simon, F-90360 Lachapelle-sous-Rougemont (FR)
(74) Mandataire: Littolff, Denis
(86) Numéro de dépôt international: PCT/FR2014/051517
(87) Numéro de publication internationale: WO 2014/207350

(56) Documents cités:
- EP-A1- 0 302 569
- EP-A1- 0 324 083
- EP-A2- 1 480 097
- WO-A1-2008/046728
- WO-A1-2010/064989
- DE-A1- 10 322 824
- US-A1- 2008 298 939

## Description

La présente invention entre dans le domaine du transport et de la manutention de charge, en particulier du chargement et du déchargement de charge exclusivement de type container.

L'invention trouvera une application préférentielle, mais aucunement limitative, dans le transport et la manutention de container au sein d'une zone portuaire.

De manière connue, un container est une enceinte de dimensions normalisées, se présentant sous la forme d'un bloc parallélépipédique et permettant d'y charger des marchandises en vue de leur stockage ainsi que leur transport, notamment par voie maritime sur des bateaux appelés « porte-containers ».

Plus précisément, un tel container comprend une structure en forme de parallélépipède rectangle, dont chaque coin est équipé d'un coin normalisé en acier, dit « coin ISO », reliant des montants métalliques verticaux. Ainsi, il est possible d'empiler plusieurs containers les uns sur les autres, formant une zone de stockage. Cet empilement est effectué par des engins de levage depuis des véhicules de transports pourvus d'une plateforme de réception d'un ou plusieurs containers, et inversement lors du dépilement. Ces opérations sont effectuées par l'intermédiaire d'une station ou « dock » recevant un ou plusieurs containers en vue de leur chargement ou déchargement sur la plate-forme d'un véhicule, réciproquement lors du dépilement ou de l'empilement depuis et vers la zone de stockage.

Plus précisément, une station est constituée d'au moins deux glissières s'étendant horizontalement, parallèlement l'une par rapport à l'autre. Ces glissières présentent une section conformée en L, tournées l'une vers l'autre, et espacées pour recevoir la largeur standardisée des containers, afin de constituer des zones planes d'appui inférieur longitudinal sur laquelle vient reposer les containers qui y sont chargés par l'engin de levage depuis la zone de stockage et déchargés depuis le véhicule.

Dans un cas comme dans l'autre, ledit véhicule vient se placer au sein de l'espace ménagé entre les glissières et sous ces dernières. Pour ce faire, la station est surélevée par l'intermédiaire d'embases ou pieds s'étendant verticalement et reliant en partie haute, à intervalles réguliers, chaque glissière. Ainsi, le véhicule peut venir se positionner sous les glissières, en vue de charger ou décharger ses containers.

On notera d'ores et déjà que la largeur de l'espacement entre les embases et les glissières qu'elles supportent, est fonction de la largeur standardisée des containers. De plus, étant donné que le véhicule reçoit sur sa plate-forme arrière un ou plusieurs containers, son châssis présente une largeur équivalente à leur largeur, mais un peu moindre, pour pouvoir justement effectuer les manoeuvres de positionnement pour s'introduire, se garer et s'extraire de la station. Ces contraintes de dimensions nécessitent une précision dans la conduite de chaque véhicule et une dextérité du conducteur, entrainant une perte de temps non négligeable si ce dernier est obligé de s'y reprendre à plusieurs fois, voire risquant d'heurter les embases de la station et de la dégrader, ainsi que le véhicule.

Etant donné que la station est surélevée, la plate-forme du véhicule est configurée telle une table élévatrice de manière à passer d'une position basse à une position haute, et inversement. En position basse, la hauteur de la plate-forme l'autorise à passer sous les glissières, tandis qu'en position haute, le débattement vertical de ladite plate-forme l'autorise à venir au dessus. En outre, les moyens de levage du véhicule se situent de façon centrée, de manière à se déployer et se replier dans l'espace séparant lesdites glissières.

Plus particulièrement, lors du chargement d'au moins un container déposé au préalable sur les glissières de la station, le véhicule se positionne au sein de la station, sous les glissières. Puis, sa plate-forme est actionnée pour monter et lever le container, qui ne repose alors plus sur les glissières. Ensuite, ce véhicule sort de la station et redescend sa plate-forme.

Lors du déchargement, avant de se positionner au sein de la station, le véhicule lève sa plate-forme et le container qui repose dessus. Puis il vient garer son châssis sous les glissières pour ensuite redescendre la plate-forme jusqu'en position basse, laissant alors le container reposer sur les glissières. Enfin, il repart à vide avec sa plate-forme baissée.

Par ailleurs, la zone de stockage étant située à une extrémité de la station, ou bien d'un ensemble de plusieurs stations, le véhicule doit venir s'y garer en marche arrière depuis l'extrémité opposée. Une fois le chargement ou le déchargement effectué, le véhicule repart alors en marche avant.

En particulier, chaque véhicule vient se positionner au sein d'une zone d'attente, située à proximité de chaque station, à l'opposée de la zone de stockage. Une telle zone s'étend sensiblement dans l'alignement de chaque station, formant un couloir de circulation. L'accès à ce couloir est autorisé par l'espace libre situé entre ladite zone d'attente et ladite station. Ainsi, un véhicule vient se positionner en marche avant au sein de la zone d'attente, pour ensuite repartir en marche arrière vers la station correspondante en suivant ledit couloir.

On aura compris que ces manoeuvres nécessitent une haute précision pour venir positionner le véhicule dans la station, entre les embases et sous les glissières, parfaitement aligner avec ces dernières, afin que le container vienne reposer de part et d'autre sur lesdites glissières, ou soit parfaitement aligné avec la plateforme qui va venir le lever. Une telle précision a nécessité la mise en oeuvre d'un système complexe de guidage automatique des véhicules. En outre, un tel système fait intervenir un guidage électronique du véhicule, notamment de façon filoguidée.

Dès lors, dans cette logique, les véhicules ont été entièrement automatisés, s'affranchissant de la présence d'un conducteur et d'un poste de pilotage. Ainsi, lesdits véhicules s'apparentent à des plates-formes motorisées, totalement indépendantes et commandées par un système informatique complexe, gérant l'intégralité du parc de véhicule de l'installation, notamment de l'installation portuaire. En somme, le système de guidage est déployé sur l'intégralité de la surface de ce port, assurant le déplacement contrôlé et automatique de tous les véhicules, de façon coordonnée les uns par rapport aux autres.

Si une telle automatisation, supprimant le conducteur humain, assure un guidage et un positionnement parfaits des véhicules, il présente toutefois un inconvénient majeur. En effet, le déplacement automatique des véhicules est limité en vitesse, afin d'éviter ou d'anticiper tout risque d'accident. Actuellement, la vitesse de progression de tels véhicules automatiques est de l'ordre de 5 kilomètres par heure (km/h). Etant donné que l'intégralité du parc portuaire est commandée de façon automatique, tous les véhicules se déplacent à la même vitesse. Si cette lenteur est nécessaire au moment de positionner précisément chaque véhicule au sein d'une station pour le chargement ou le déchargement, il est préjudiciable dans d'autres zones où transitent les véhicules et, du fait de l'absence de conducteur, il n'est pas possible d'envisager d'accélérer cette vitesse pour des raisons de sécurité évidente.

De plus, le cheminement des véhicules s'opère selon des circuits spécifiques et s'étendant le long des moyens de guidage. Même si plusieurs alternatives de circuits sont possibles, aucun changement de trajectoire n'est envisageable en dehors de ces tracés. La flexibilité est donc considérablement limitée.

En outre, afin d'éviter des risques de collision, les circuits sont entièrement réservés aux déplacements de ces véhicules automatiques, interdisant l'accès aux personnes et à d'autres types de véhicules. Cette réservation entraine une perte considérable de l'espace total de la zone portuaire. De plus, il est nécessaire d'aménager les infrastructures pour modéliser physiquement ces réservations d'espaces de circulation automatique, entrainant aussi une complexité dans sa mise en oeuvre et dans l'enchevêtrement des circuits automatiques et ceux qui ne le sont pas.

Un exemple d'une telle solution, visant spécifiquement le transport et la manutention de camions de type poids lourds, avec ou sans remorque, est décrite dans le document EP 1 480 097. On constate un guidage entièrement automatisé, de type filaire, au sein d'une zone depuis une entrée vers une sortie, de sorte que chaque véhicule passe par plusieurs postes, cheminant toujours en marche avant.

Dans ce contexte, il a été imaginé d'optimiser la circulation des véhicules en combinant le caractère automatique du guidage des véhicules avec la conduite manuelle, assurant réciproquement la précision des déplacements à une vitesse de sécurité au moment du chargement et déchargement aux abords des stations et une possibilité d'augmenter la vitesse de déplacement en dehors de ces zones.

Le document EP 0 324 083 décrit l'art antérieur le plus proche et un exemple de système de guidage d'un véhicule de transport et de manutention sur un site aéronautique. Un tel véhicule est guidé par l'intermédiaire d'un système filaire pour venir automatiquement se positionner aux abords d'un aéronef, en vue d'effectuer une opération de levage de sa plate-forme arrière, destinée à supporter un caisson enfermant des bagages. La précision du guidage doit permettre au véhicule de se positionner parfaitement, de sorte que, lors de l'opération de levage, l'arrière de la plate-forme se trouve au plus près de la carlingue de l'aéronef, en vis-à-vis des trappes d'accès à la soute, sans pour autant la toucher, ce qui risquerait de l'endommager.

Par ailleurs, lors de son stationnement, plusieurs véhicules sont guidés en marche arrière, pour venir se garer parallèlement les uns aux autres, orthogonalement et de façon aboutée par l'arrière au bord d'un quai de chargement, ne nécessitant alors qu'un positionnement précis pour arrêter l'arrière du véhicule au plus près dudit quai et un guidage pour orienter les véhicules parallèlement les uns par rapport aux autres.

En dehors de l'abord d'un aéronef ou du quai de chargement, les véhicules sont contrôlés manuellement par leur conducteur.

Toutefois, cette solution est employée dans le cadre d'un aéroport, avec des contraintes spécifiques visant le type de marchandises transportées, à savoir des bagages, dont le poids et le volume sont limités, transportables au sein de caissons qu'il est possible de déplacer manuellement.

Une technique de guidage alternative est décrite dans le document WO 2010/064989, permettant à un conducteur de recevoir des instructions de conduite pour venir garer son camion en marche arrière, abouté orthogonalement à un quai de chargement. Cette solution s'apparente à un radar de recule, mais au lieu d'équiper le camion, c'est le quai de chargement qui émet un signal pour détecter la position de l'arrière de la remorque lors des manoeuvres en marche arrière, pour communiquer des instructions de pilotage au conducteur.

Encore une fois, cette solution dépend de la dextérité dont fait preuve le chauffeur pour conduire son camion et suivre parfaitement les instructions de guidage.

En outre, toutes les solutions existantes ne présentent pas la nécessité d'une précision dans le guidage latéral du véhicule, pour venir s'introduire au sein d'un espace confiné et limité en largeur, pour ensuite pouvoir effectuer une opération de levage ou d'abaissement de sa plate-forme arrière pour passer entre les glissières d'une station de manutention de containers.

A cet effet, l'invention concerne précisément un procédé de guidage d'un véhicule de transport, chargement et déchargement d'au moins un container selon la revendication 1, au sein d'une zone de manutention équipée d'au moins une station de chargement et de déchargement dudit container, ladite station (4) étant constituée d'au moins deux glissières montées sur des embases et s'étendant horizontalement, parallèlement l'une par rapport à l'autre, et espacées pour recevoir la largeur standardisée dudit container, constituant une zone surélevée d'appui inférieur longitudinal sur laquelle vient reposer ledit container, ledit véhicule étant dimensionné en largeur pour permettre son passage entre les embases de ladite station et étant équipé d'une plate-forme arrière de levage dont la largeur autorise, d'une part, le passage entre les glissières de ladite station et, d'autre part, le maintien dudit container lors des opération de chargement et de déchargement,
ledit procédé comprenant successivement les étapes suivantes :
- un conducteur conduit manuellement ledit véhicule au sein de ladite zone de manutention, en dehors des abords de ladite station ;
- ledit conducteur positionne manuellement ledit véhicule aux abords de ladite station et le gare au sein d'une zone d'attente ;
ledit procédé étant caractérisé en ce que successivement :
- une fois garé, ledit véhicule est pris en charge par un guidage automatique, actionnant automatiquement au moins le contrôle de la trajectoire dudit véhicule ;
- ledit véhicule est guidé automatiquement en marche arrière jusqu'à se positionner au sein de ladite station entre les embases et sous les glissières de ladite station ;
- on effectue une opération de chargement ou de déchargement d'au moins un container réciproquement depuis ladite station vers ledit véhicule, ou inversement, au travers d'une opération de levage ou d'abaissement de ladite plate-forme passant entre les glissières ;
- ledit véhicule (1) est guidé automatiquement en marche avant hors de ladite station (4) jusqu'à se positionner au sein de ladite zone d'attente (6) ou bien conduit manuellement en marche avant par le conducteur, le conducteur commandant l'abaissement de ladite plate-forme après une opération de chargement une fois le véhicule (1) hors de ladite station (4) ;
- ledit véhicule est guidé automatiquement en marche avant hors de ladite station jusqu'à se positionner au sein de ladite zone d'attente ou bien conduit manuellement en marche avant par le conducteur, ledit conducteur commandant l'abaissement de ladite plate-forme après une opération de chargement une fois le véhicule hors de ladite station ;
- ledit guidage automatique est abandonné et ledit conducteur reprend la conduite manuelle ;
- ledit conducteur déplace manuellement ledit véhicule en marche avant en dehors de ladite zone d'attente. Selon l'invention, en prise en charge par le guidage automatique, la vitesse de déplacement et l'accélération dudit véhicule sont limitées en dessous de seuils.

Avantageusement, entre le positionnement aux abords de la station et le garage au sein de la zone d'attente, ledit conducteur peut activer manuellement le levage de la plate-forme dudit véhicule en vue d'un déchargement d'un container qu'elle supporte, puis au cours de l'opération de déchargement, l'abaissement de ladite plate-forme est commandé manuellement ou automatiquement.

De préférence, entre le positionnement aux abords de la station et le garage au sein de la zone d'attente, le conducteur peut vérifier que ladite plate-forme est abaissée, puis au cours de l'opération de chargement, le levage de ladite plate-forme est commandé manuellement ou automatiquement, puis après chargement et positionnement au sein de ladite zone d'attente, ladite plate-forme est abaissée manuellement ou automatiquement.

En outre, le procédé peut consister à détecter automatiquement la présence d'une charge sur la plate-forme dudit véhicule et à commander sa levée et sa descente en fonction de l'opération de chargement ou déchargement à effectuer au moment de la prise en charge par le guidage automatique.

En particulier, le guidage automatique peut être effectué de manière filoguidée entre ladite zone d'attente et ladite station, selon un couloir s'étendant de l'une à l'autre des extrémités situées en vis-à-vis.

Selon une caractéristique spécifique, le contrôle de la trajectoire peut consister à modifier automatiquement l'orientation d'au moins un essieu dudit véhicule, notamment plusieurs simultanément.

Enfin, pendant le guidage automatique, le contrôle de l'avancement et du freinage du véhicule peut s'effectuer manuellement par ledit conducteur, par l'actionnement par l'intermédiaire réciproquement de l'accélérateur et du frein dudit véhicule, notamment des pédales correspondantes.

D'autres caractéristiques et avantages de l'invention ressortiront de la description détaillée qui va suivre des modes de réalisation non limitatifs de l'invention, en référence aux figures annexées, dans lesquelles :

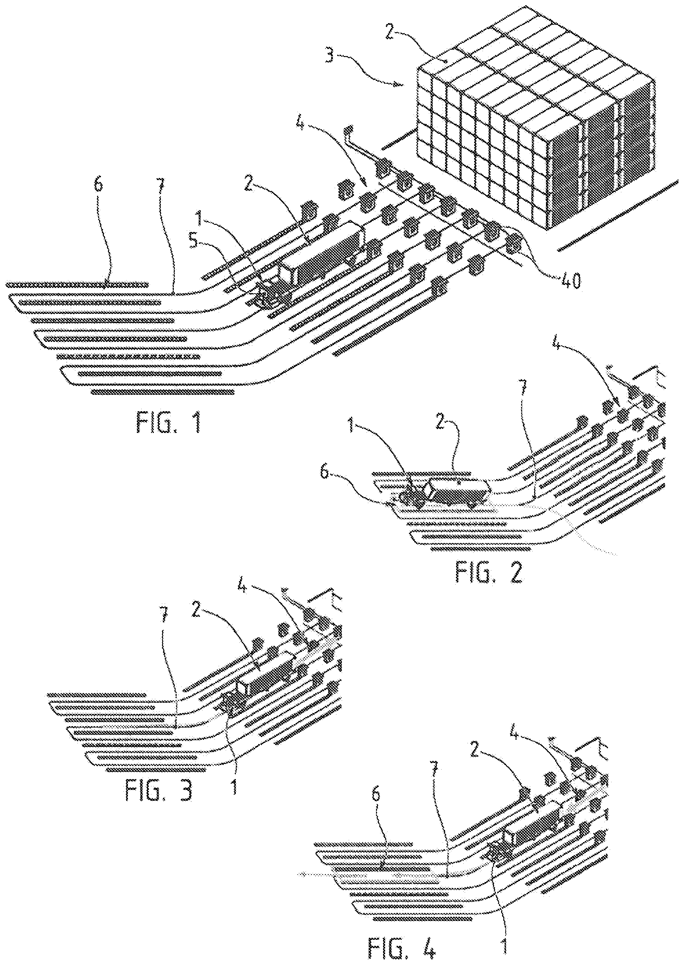

- la figure 1 représente schématiquement une vue en perspective de trois quart avant et de dessus d'une installation montrant un véhicule portant un container, évoluant à proximité d'une station de chargement et de déchargement positionnée à côté d'une zone de stockage de containers ;
- les figures 2 à 4 représentent trois vues similaires à la figure 1, correspondant à trois étapes lors de la mise en oeuvre du procédé de guidage selon l'invention, à savoir la conduite manuelle jusqu'à garer le véhicule en zone d'attente ; la marche arrière en guidage automatique vers ladite station le long d'un couloir ; puis le départ automatique en marche avant depuis la station jusqu'à ladite zone d'attente le long dudit couloir suivi de la sortie manuelle de ladite zone d'attente.

La présente invention concerne le guidage d'un véhicule 1 de transport, chargement et déchargement d'au moins un container 2.

Ce guidage sera mis en oeuvre au sein d'une zone de manutention, notamment une zone portuaire, de préférence un port.

Une telle zone de manutention peut comprendre au moins une zone de stockage 3 de plusieurs containeurs 2, empilés les uns sur les autres, selon plusieurs rangées et colonnes, comme visible sur la figure 1. Cette zone de stockage 3 constitue un tampon au sein duquel sont placés provisoirement les containers 2, en vue de leur chargement sur des véhicules 1, ou bien vers d'autres équipements, notamment des bateaux de type « porte-containers ».

Plus précisément, en vue du chargement sur ou du déchargement depuis un véhicule 1, la zone de manutention comprend aussi, à proximité de ladite zone de stockage 3, au moins une station 4 ou « dock » de chargement et déchargement.

Préférentiellement, plusieurs stations 4 sont alignées en vis-à-vis des rangées de ladite zone de stockage 3, selon le sens longitudinal desdits containers 2.

Selon le mode préférentiel de réalisation, comme représenté sur les figures, chaque station 4 peut être constituée par des paires de supports 40 espacés transversalement selon la largeur standard d'un container 2 et longitudinalement à intervalles réguliers selon les différentes dimensions standards dudit container 2, en particulier sa largeur. Selon le mode de réalisation représenté à titre d'exemple, chaque station 4 comprend trois paires de supports 40.

De plus, lesdits supports 40 sont surélevés, sur des embases dont la hauteur est supérieure à la hauteur du châssis dudit véhicule 1, en particulier au moins de la partie arrière d'un tel châssis, lorsque ce dernier se trouve avec sa plate-forme en position basse. Ainsi, ledit châssis peut venir se positionner entre les deux supports 40 de chaque paire.

A ce titre, on notera que la largeur des essieux dudit véhicule 1 est inférieure à l'espacement latéral entre deux supports 40.

En d'autres termes, ladite station 4 est constituée d'au moins deux glissières montées sur des embases et s'étendant horizontalement, parallèlement l'une par rapport à l'autre, et espacées pour recevoir la largeur standardisée dudit container, constituant une zone surélevée d'appui inférieur longitudinal sur laquelle vient reposer ledit container. Par ailleurs, ledit véhicule 1 est dimensionné en largeur pour permettre son passage entre les embases de ladite station 4 et est équipé d'une plate-forme arrière de levage dont la largeur autorise, d'une part, le passage entre les glissières de ladite station 4 et, d'autre part, le maintien dudit container 1 lors des opérations de chargement et de déchargement.

Dès lors, on comprend que le guidage automatique du véhicule 1 en marche arrière au sein de la station 4, entre ses embases, sous ses glissières, doit être aussi précis que possible, pour autoriser le passage et le garer convenablement.

En effet, communément, les espaces libres entre le véhicule 1 et les embases, ainsi qu'entre la plate-forme et les glissières de la station 4, n'excèdent pas plus d'une ou deux dizaines de centimètres.

Une fois le véhicule 1 positionné à cet emplacement, au sein de la station 4, il est possible de charger ou décharger un container 2.

Lors du chargement, depuis la station 4 vers le véhicule 1, au moins un container 2 est transféré préalablement, par des moyens adaptés, notamment une grue, depuis la zone de stockage 3 vers ladite station 4. Ledit container 2 repose alors sur le haut des supports 40. Le véhicule 1 vient alors se garer dans la station 4, son châssis sous le container 2. Une opération de levage d'une plate-forme, dont est pourvu l'arrière dudit châssis, permet de soulever ledit container 2 jusqu'à une position haute, au dessus des supports 40. Puis le véhicule n'a plus qu'à avancer, redescendre sa plate-forme, puis repartir avec le container 2 chargé.

Lors de l'opération inverse de déchargement, le véhicule 1 arrive chargé d'au moins un container 2. Avant de se garer au sein de la station 4, la plate-forme est levée. Une fois en place au sein de la station 4, ladite plate-forme est redescendue, jusqu'à une position basse sous les supports 40 dans laquelle le container 2 repose sur ces derniers. Le véhicule 1 peut alors se dégager et ressortir de la station 4. Ultérieurement, ledit container 2 pourra est pris en charge par la grue pour être stocké dans la zone de stockage 3.

Avantageusement, ledit véhicule 1 comprend une cabine 5 recevant un poste de conduite et une personne qualifiée pour conduire et manoeuvrer le véhicule 1. Cette cabine 5 se situe à l'avant dudit véhicule 1.

Ainsi, un conducteur peut conduire manuellement le véhicule 1 au sein de ladite zone de manutention. Cette conduite manuelle s'effectue sans contrainte en dehors des abords de ladite station 4. En somme, le conducteur peut contrôler la direction, l'accélération et le freinage, conformément aux restrictions des zones qu'il traverse.

Lors de cette conduite, ledit conducteur positionne manuellement ledit véhicule 1 aux abords de ladite station 4 et le gare au sein d'une zone d'attente 6.

A ce titre, une zone d'attente 6 correspond à une station 4. Une telle zone d'attente 6 est située en vis-à-vis de sa station 4, dans son prolongement, de façon alignée ou, comme visible sur les figures, inclinées par rapport à l'axe de ladite station 4. Cette inclinaison facilite la manoeuvre manuelle lors de l'arrivée d'un véhicule, comme modélisé par la flèche visible sur la figure 2.

En outre, un passage 7 peut être ménagé entre l'extrémité de la station 4 et sa zone d'attente 6. Ainsi, un véhicule 1 vient directement se garer dans la zone d'attente 6 en marche avant, en passant par ledit passage.

De plus, l'extrémité opposée de chaque zone d'attente 6 est prévue ouverte, débouchant en dehors de la zone, pour permette au véhicule 1 de s'en extraire en marche avant, plus aisément sans manoeuvre. Cette opération peut alors s'effectuer manuellement.

Ainsi, une zone d'attente 6 et sa station 4 forment un couloir à l'intérieur duquel le véhicule peut progresser en marche avant ou en marche arrière.

Selon le mode de mise en oeuvre représenté sur les figures, plusieurs zones d'attente 6 et stations 5 sont positionnées les unes à côté des autres. Certains éléments, comme les supports 40, mais aussi les bordures desdites zones d'attente 6, peuvent être partagés par les zones 6 et les stations 4 qui les jouxtent.

En somme, toute l'approche vers et le départ depuis la zone d'attente 6 s'effectue manuellement par le conducteur du véhicule 1. Cette étape est représentée sur la figure 2.

Avantageusement, une fois garé au sein d'une zone d'attente 6, l'invention prévoit d'automatiser au moins partiellement la conduite dudit véhicule 1 en vue de l'approche vers la station 4 pour les opérations de chargement et déchargement (précédemment évoquées).

Pour ce faire, une fois garé, ledit véhicule 1 est pris en charge par un guidage automatique, actionnant automatiquement au moins le contrôle de la trajectoire dudit véhicule 1.

En d'autres termes, le conducteur ne peut plus agir sur la direction et changer manuellement l'orientation des essieux. Le guidage automatique se charge alors d'orienter le véhicule 1, en particulier de l'orienter lors de sa marche arrière jusqu'à la station 4, afin qu'il se trouve parfaitement dans l'alignement de cette dernière.

On notera que cet alignement s'effectue à quelques centimètres près, notamment au moins quelques millimètres, notamment à plus ou moins dix millimètres près, par exemple plus ou moins vingt centimètres de part et d'autre de l'axe médian longitudinal de la station 4.

Dès lors, ledit véhicule 1 est guidé automatiquement en marche arrière jusqu'à se positionner au sein de ladite station 4. Cette opération est représentée sur la figure 3.

Une fois en position, on effectue une opération de chargement ou de déchargement d'au moins un container 2 réciproquement depuis ladite station 4 vers ledit véhicule 1, ou inversement.

Plus précisément, entre le positionnement aux abords de la station 4 et le garage au sein de la zone d'attente 6, ledit conducteur peut activer manuellement le levage de la plate-forme dudit véhicule 1 en vue d'un déchargement d'un container 2 qu'elle supporte. Puis, au cours de l'opération de déchargement, l'abaissement de ladite plate-forme peut être commandé manuellement ou automatiquement, en vue de décharger le ou les containers 2 sur ladite station 4.

Inversement, entre le positionnement aux abords de la station et le garage au sein de la zone d'attente 6, le conducteur vérifie que ladite plate-forme est abaissée, puis au cours de l'opération de chargement, le levage de ladite plate-forme peut être commandé manuellement ou automatiquement, puis après chargement et positionnement au sein de ladite zone d'attente 6, ladite plate-forme est abaissée manuellement ou automatiquement.

D'autres variantes de levage et abaissement de la plate-forme peuvent être envisagés, notamment lors de la conduite automatique au sein du couloir entre la zone d'attente 6 et la station 4, dans un sens comme dans l'autre.

A ce titre, le procédé de guidage selon l'invention peut envisager de détecter automatiquement la présence d'une charge sur la plate-forme dudit véhicule et de commander sa levée et sa descente en fonction de l'opération de chargement ou déchargement à effectuer au moment de la prise en charge par le guidage automatique. Le conducteur n'a donc plus aucune vérification à entreprendre lui-même, le véhicule 1 se configurant automatiquement en vue de l'opération à effectuer.

Avantageusement, ensuite, ledit véhicule 1 peut aussi être guidé automatiquement en marche avant jusqu'à se positionner au sein de ladite zone d'attente 6. Cette sortie peut aussi s'effectuer de façon manuelle, le conducteur reprenant alors le contrôle total de la conduite du véhicule.

Une fois parqué au sein de cette dernière, ledit guidage automatique est abandonné et ledit conducteur reprend la conduite manuelle. Il peut alors déplacer manuellement ledit véhicule 1 en marche avant en dehors de ladite zone d'attente 6, en passant notamment par l'extrémité ouverte du couloir. Ainsi extrait de la zone d'attente 6, une fois dépassés les abords de la station 4, le conducteur a toute liberté d'augmenter sa vitesse et d'emprunter le chemin qu'il souhaite pour se rendre à sa destination.

Selon une caractéristique additionnelle, en prise en charge par le guidage automatique, la vitesse de déplacement et l'accélération dudit véhicule 1 sont limitées en dessous de seuils. En particulier, la vitesse peut être bloquée à un maximum de 5 km/h à 10 km/h, de préférence inférieure ou égale à 5 km/h.

En relation avec cette vitesse et cette accélération limitées, pendant le guidage automatique, le contrôle de l'avancement et du freinage du véhicule 1 peut s'effectuer manuellement par ledit conducteur. Ainsi, c'est toujours ce dernier qui contrôle la progression de l'avancement, vers l'avant ou vers l'arrière. Ce contrôle humain permet notamment d'arrêter le véhicule 1 en cas d'urgence, ou bien pour éviter une collision avec un piéton ou un autre véhicule. Ce contrôle manuel peut être assuré par l'actionnement par l'intermédiaire réciproquement de l'accélérateur et du frein dudit véhicule 1, notamment des pédales correspondantes.

Avantageusement, plusieurs types de guidage peuvent être envisagés. Selon le mode préférentiel de réalisation, comme visible sur les figures, le guidage automatique peut être effectué de manière filoguidée entre ladite zone d'attente 6 et ladite station 4, selon un couloir s'étendant de l'une à l'autre des extrémités situées en vis-à-vis. Dès lors, des moyens complémentaires peuvent équiper le véhicule 1 afin de suivre la ligne filaire 7 desdits moyens de guidage filoguidé.

En outre, une telle ligne 7 peut être positionnée au sol, fixée, s'étendant selon les axes médians longitudinaux de la zone d'attente 6 et de la station 4. Le véhicule 1 comprend alors des moyens complémentaires pour repérer et s'aligner avec ladite ligne 7. Ce sont ces moyens complémentaires qui transmettent les commandes de changement d'orientation des essieux du véhicule 1 pour corriger et maintenir l'alignement avec ladite ligne 7.

Dès lors, l'invention prévoit que le contrôle de la trajectoire consiste à modifier automatiquement l'orientation d'au moins un essieu dudit véhicule 1. Ce contrôle est assuré par les moyens complémentaires adaptés, notamment comprenant des cerveaux moteurs agissant directement ou indirectement sur la commande manuelle de direction.

De façon essentielle, le procédé de guidage selon l'invention reprend l'une et/ou l'autre des différentes étapes susmentionnées.

Ainsi, le guidage partiellement manuel et partiellement automatique combine les avantages d'une souplesse de conduite manuelle en dehors de la zone de chargement de la station 4, et d'une précision du guidage automatique au sein de cette dernière.

## Revendications

1. Procédé de guidage d'un véhicule (1) de transport, chargement et déchargement d'au moins un container (2), au sein d'une zone de manutention équipée d'au moins une station (4) de chargement et de déchargement dudit container (2), ladite station (4) étant constituée d'au moins deux glissières montées sur des embases et s'étendant horizontalement, parallèlement l'une par rapport à l'autre, et espacées pour recevoir la largeur standardisée dudit container (2), constituant une zone surélevée d'appui inférieur longitudinal sur laquelle vient reposer ledit container (2), ledit véhicule (1) étant dimensionné en largeur pour permettre son passage entre les embases de ladite station (4) et étant équipé d'une plate-forme arrière de levage dont la largeur autorise, d'une part, le passage entre les glissières de ladite station (4) et, d'autre part, le maintien dudit container (2) lors des opérations de chargement et de déchargement,
ledit procédé comprenant successivement les étapes suivantes :
- un conducteur conduit manuellement ledit véhicule (1) au sein de ladite zone de manutention, en dehors des abords de ladite station (4) ;
- ledit conducteur positionne manuellement ledit véhicule (1) aux abords de ladite station (4) et le gare au sein d'une zone d'attente (6) ;
- une fois garé, ledit véhicule (1) est pris en charge par un guidage automatique, actionnant automatiquement au moins le contrôle de la trajectoire dudit véhicule (1) ;
- ledit véhicule (1) est guidé automatiquement en marche arrière jusqu'à se positionner au sein de ladite station (4), entre les embases et sous les glissières de ladite station (4);
- on effectue une opération de chargement ou de déchargement d'au moins un container (2) réciproquement depuis ladite station (4) vers ledit véhicule (1), ou inversement, au travers d'une opération de levage ou d'abaissement de ladite plate-forme passant entre les glissières ;
- en prise en charge par le guidage automatique, la vitesse de déplacement et l'accélération dudit véhicule sont limités en dessous de seuils ;
- après l'opération de chargement/déchargement, ledit véhicule (1) est guidé automatiquement en marche avant hors de ladite station (4) jusqu'à se positionner au sein de ladite zone d'attente (6) ou bien conduit manuellement en marche avant par le conducteur, le conducteur commandant l'abaissement de ladite plate-forme après une opération de chargement une fois le véhicule (1) hors de ladite station (4) ;
- ledit guidage automatique est abandonné et ledit conducteur reprend la conduite manuelle ;
- ledit conducteur déplace manuellement ledit véhicule (1) en marche avant en dehors de ladite zone d'attente (6).

2. Procédé de guidage selon l'une quelconque des revendications précédentes, **caractérisé en ce qu'**entre le positionnement aux abords de la station (4) et le garage au sein de la zone d'attente (6), ledit conducteur active manuellement le levage de la plate-forme dudit véhicule (1) en vue d'un déchargement d'un container qu'elle supporte, puis au cours de l'opération de déchargement, l'abaissement de ladite plate-forme est commandé manuellement ou automatiquement.

3. Procédé de guidage selon l'une quelconque des revendications précédentes, **caractérisé en ce qu'**entre le positionnement aux abords de la station (4) et le garage au sein de la zone d'attente (6), le conducteur vérifie que ladite plate-forme est abaissée, puis au cours de l'opération de chargement, le levage de ladite plate-forme est commandé manuellement ou automatiquement, puis après chargement et positionnement au sein de ladite zone d'attente (6), ladite plate-forme est abaissée manuellement ou automatiquement.

4. Procédé de guidage selon la revendication 3, **caractérisé en ce qu'**il consiste à détecter automatiquement la présence d'une charge sur la plate-forme dudit véhicule (1) et à commander sa levée et sa descente en fonction de l'opération de chargement ou déchargement à effectuer au moment de la prise en charge par le guidage automatique.

5. Procédé de guidage selon l'une quelconque des revendications précédentes, **caractérisé en ce que** le guidage automatique est effectué de manière filoguidée entre ladite zone d'attente (6) et ladite station (4), selon un couloir s'étendant de l'une à l'autre des extrémités situées en vis-à-vis.

6. Procédé de guidage selon l'une quelconque des revendications précédentes, **caractérisé en ce que** le contrôle de la trajectoire consiste à modifier automatiquement l'orientation d'au moins un essieu dudit véhicule (1).

7. Procédé de guidage selon l'une quelconque des revendications précédentes, **caractérisé en ce que** pendant le guidage automatique, le contrôle de l'avancement et du freinage du véhicule (1) s'effectue manuellement par ledit conducteur, par l'actionnement par l'intermédiaire réciproquement de l'accélérateur et du frein dudit véhicule (1), notamment des pédales correspondantes.

## Patentansprüche

1. Verfahren zum Führen eines Fahrzeugs (1) zum Transportieren, Aufladen und Abladen mindestens eines Containers (2) innerhalb einer Umschlagzone, die mit mindestens einer Station (4) zum Aufladen und Abladen des Containers (2) ausgestattet ist, wobei die Station (4) aus mindestens zwei Gleitschienen besteht, die auf Sockeln montiert sind und sich waagerecht parallel zueinander erstrecken und beabstandet sind, um die normierte Breite des Containers (2) aufzunehmen, wobei sie eine angehobene untere Längsstützzone bilden, auf welcher der Container (2) zu liegen kommt, wobei das Fahrzeug (1) in der Breite abgemessen ist, um seinen Durchgang zwischen den Sockeln der Station (4) zu ermöglichen, und mit einer hinteren Hebeplattform ausgestattet ist, deren Breite einerseits den Durchgang zwischen den Gleitschienen der Station (4) und andererseits das Festhalten des Containers (2) bei den Auf- und Abladevorgängen ermöglicht,
wobei das Verfahren nacheinander folgende Schritte umfasst:
- ein Fahrer fährt das Fahrzeug (1) manuell innerhalb der Umschlagzone außerhalb der Umgebung der Station (4);
- der Fahrer positioniert das Fahrzeug (1) manuell in der Umgebung der Station (4) und parkt es innerhalb einer Wartezone (6);
- nach dem Parken wird das Fahrzeug (1) von einer automatischen Führung übernommen, die mindestens die Steuerung der Fahrbahn des Fahrzeugs (1) automatisch betätigt;
- das Fahrzeug (1) wird im Rückwärtsgang automatisch geführt, bis es innerhalb der Station (4) zwischen den Sockeln und unter den Gleitschienen der Station (4) positioniert ist;
- es erfolgt ein Auf- oder Abladevorgang mindestens eines Containers (2) wechselseitig von der Station (4) auf das Fahrzeug (1) oder umgekehrt über einen Hebe- oder Senkvorgang der Plattform, die zwischen die Gleitschienen geht;
- bei der Übernahme durch die automatische Führung sind die Fahrgeschwindigkeit und die Beschleunigungsgeschwindigkeit des Fahrzeugs unterhalb bestimmter Schwellen eingeschränkt;
- nach dem Auf-/Abladevorgang wird das Fahrzeug (1) im Vorwärtsgang automatisch aus der Station (4) geführt, bis es innerhalb der Wartezone (6) positioniert ist, oder wird im Vorwärtsgang von dem Fahrer manuell gefahren, wobei der Fahrer das Absenken der Plattform nach einem Aufladevorgang regelt, nachdem das Fahrzeug (1) die Station (4) verlassen hat;
- die automatische Führung wird abgebrochen und der Fahrer übernimmt wieder das manuelle Fahren;
- der Fahrer bewegt das Fahrzeug (1) manuell im Vorwärtsgang aus der Wartezone (6) heraus.

2. Führungsverfahren nach einem der vorhergehenden Ansprüche, **dadurch gekennzeichnet, dass** zwischen dem Positionieren in der Umgebung der Station (4) und dem Parken innerhalb der Wartezone (6) der Fahrer das Anheben der Plattform des Fahrzeugs (1) im Hinblick auf das Abladen eines Containers, den sie trägt, manuell aktiviert, und dann im Verlauf des Abladevorgangs das Absenken der Plattform manuell oder automatisch geregelt wird.

3. Führungsverfahren nach einem der vorhergehenden Ansprüche, **dadurch gekennzeichnet, dass** zwischen dem Positionieren in der Umgebung der Station (4) und dem Parken innerhalb der Wartezone (6) der Fahrer überprüft, dass die Plattform abgesenkt ist, und dann im Verlauf des Aufladevorgangs das Anheben der Plattform manuell oder automatisch geregelt wird, und dann nach dem Aufladen und dem Positionieren innerhalb der Wartezone (6) die Plattform manuell oder automatisch abgesenkt wird.

4. Führungsverfahren nach Anspruch 3, **dadurch gekennzeichnet, dass** es darin besteht, das Vorhandensein einer Ladung auf der Plattform des Fahrzeugs (1) automatisch zu detektieren und ihr Anheben und Absenken in Abhängigkeit von dem Auf- oder Abladevorgang, der bei der Übernahme durch die automatische Führung vorzunehmen ist, zu regeln.

5. Führungsverfahren nach einem der vorhergehenden Ansprüche, **dadurch gekennzeichnet, dass** die automatische Führung zwischen der Wartezone (6) und der Station (4) in einem Korridor, der sich von dem einen zu dem anderen der Enden erstreckt, die sich gegenüberliegen, drahtgesteuert erfolgt.

6. Führungsverfahren nach einem der vorhergehenden Ansprüche, **dadurch gekennzeichnet, dass** die Steuerung der Fahrbahn darin besteht, die Orientierung mindestens einer Radachse des Fahrzeugs (1) automatisch zu ändern.

7. Führungsverfahren nach einem der vorhergehenden Ansprüche, **dadurch gekennzeichnet, dass** während der automatischen Führung die Steuerung der Vorwärtsbewegung und der Bremsung des Fahrzeugs (1) durch den Fahrer durch die Betätigung wechselseitig des Gaspedals und der Bremse des Fahrzeugs (1), insbesondere der entsprechenden Pedale, manuell erfolgt.

## Claims

1. A method for guiding a vehicle (1) for transporting, loading and unloading at least one container (2), within a handling zone equipped with at least one loading and unloading station (4) for said container (2), said station (4) being made up of at least two guideways mounted on bases and extending horizontally, parallel to one another, and spaced apart to receive the standardized width of said container (2), making up a raised lower longitudinal bearing zone on which said container (2) rests, said vehicle (1) being sized in terms of width to allow it to pass between the bases of said station (4) and being equipped with a rear lifting platform whereof the width on the one hand allows the passage between the guideways of said station (4), and on the other hand, the maintenance of said container (2) during loading and unloading operations,
said method successively comprising the following steps:
- a driver manually drives said vehicle (1) within said handling zone, outside the immediate vicinity of said station (4);
- said driver manually positions said vehicle (1) in the vicinity of said station (4) and parks it within a waiting zone (6);
- once parked, said vehicle (1) is handled by automatic guidance, automatically actuating at least the control of the trajectory of said vehicle (1);
- said vehicle (1) is guided automatically in reverse until it is positioned within said station (4) between the bases and below the guideways of said station (4);
- a loading or unloading operation is performed for at least one container (2) reciprocally from said station (4) toward a vehicle (1), or conversely, through a raising or lowering operation of said platform passing between the guideways;
- when handled by the automatic guidance, the movement speed and the acceleration of said vehicle are limited below thresholds;
- after the loading/unloading operation, said vehicle (1) is guided automatically in forward movement outside said station (4) until it is positioned within said waiting zone (6) or driven manually in forward motion by the driver, the driver commanding the lowering of said platform after a loading operation once the vehicle (1) is outside said station (4);
- said automatic guidance is abandoned and said driver resumes manual driving;
- said driver moves said vehicle (1) forward manually outside said waiting zone (6).

2. The guidance method according to any one of the preceding claims, **characterized in that** between the positioning in the vicinity of the station (4) and the parking within the waiting zone (6), said driver can manually activate the raising of the platform of said vehicle (1) in order to unload a container that it supports, then during the unloading operation, the lowering of said platform is commanded manually or automatically.

3. The guidance method according to any one of the preceding claims, **characterized in that** between the positioning in the vicinity of the station (4) and the parking within the waiting zone (6), the driver can verify that said platform is lowered, then during the loading operation, the lifting of said platform is commanded manually or automatically, then after loading and positioning within said waiting zone (6), said platform is lowered manually or automatically.

4. The guidance method according to claim 3, **characterized in that** it consists of automatically detecting the presence of a load on the platform of said vehicle (1) and commanding its raising and lowering based on the loading or unloading operation to be done during that handling by the automatic guidance means.

5. The guidance method according to any one of the preceding claims, **characterized in that** the automatic guidance can be done in a wire-guided manner between said waiting zone (6) and said station (4), along a corridor extending from one end to the other, opposite end.

6. The guidance method according to any one of the preceding claims, **characterized in that** controlling the trajectory consists of automatically modifying the orientation of at least one axle of the vehicle (1).

7. The guidance method according to any one of the preceding claims, **characterized in that** during the automatic guidance, the advancement and braking of the vehicle (1) is controlled manually by the driver, via actuating by means of the accelerator and brake of said vehicle (1), reciprocally, in particular the corresponding pedals.
